# EUROPEAN PATENT APPLICATION

(11) **EP 4 563 211 A1**
(43) Date of publication of application: **04.06.2025**
(21) Application number: 23213143.3
(22) Date of filing: 29.11.2023
(51) Int. Cl.: B01D 46/24

(54) **FILTER ELEMENTS AND RELATED FILTER ASSEMBLIES**

(71) Applicant: Donaldson Company, Inc., Bloomington, MN 55431 (US)
(72) Inventor: CATOOR, Bart, Bloomington, 55431 (US); VAN DE POEL, Günther, Bloomington, 55431 (US)
(74) Representative: IPLodge bv

(57) **Abstract**

The present disclosure relates to a filter element comprising a filtration media pack comprising a longitudinal axis, a first open end cap arranged at a first axial end of the filtration media pack comprising a central opening, wherein the first end cap is at least partially flexible and non-destructively deformable in a radial direction, and comprises
a. a circumferential seal circumferentially surrounding the opening, wherein the circumferential seal comprises one or more radial seal extensions; and
b. one or more, preferably separate, reinforcement structures at least partially embedded into a material of the first end cap and preferably arranged in respective areas of the one or more radial seal extensions.

## Description

### Field of the disclosure

The present disclosure relates to the field of gas filtration, such as for instance air filtration. It relates to the field of filter assemblies comprising a filter element which is arranged in a filter housing in a sealing manner, such that air passing from an inlet of the housing to an outlet of the housing is filtered by the filter element. Preferably the assemblies are used for filtering air that is afterwards directed to an engine of for instance a vehicle.

### Background

Filter elements, also named filter cartridges, are used for a wide variety of filtering applications and the fluid to be filtered can be a liquid or a gas, e.g. air.

Indeed, in many instances, it is desired to filter contaminant material from a fluid stream. For example, airflow streams to engines for motorized vehicles or for power generation equipment, construction equipment or other equipment, gas streams to gas turbine systems and air streams to various combustion furnaces, carry particulate contaminant therein. It is preferred for such systems that contaminant materials be removed from the fluid or at least be reduced.

Filter elements comprise filter media for removing contaminant materials when the fluid flows through the filter media. Commonly used and commercially available filter media are for example pleated media or fluted media. When the filter media is loaded with dust and/or particles above a certain threshold load, a filter element needs to be replaced. Filter elements are typically installed in the housing in a replaceable manner. There is a need in industry for new solutions which allow an easy installation of a correct filter element in a filter housing, especially complex filter housing designs, and which would not allow the installation of a wrong filter element. Complex filter housing designs can for instance be a result of boundary conditions imposed by the geometry and positioning of other vehicle/engine components.

Further, solutions that reduce filter element weight and amount of used material are appreciated in industry, both for economic as well as ecologic purposes.

It is generally important to install correct filter elements, in a correct manner, for a certain filter housing in order to avoid damage to the equipment or engine which makes use of the filtered air/gas.

### Summary

It is an object of embodiments of the present disclosure to provide a filter element according to claim 1, and a package and filter assemblies comprising such filter element.

The present invention is defined in the appended independent claims. The dependent claims define advantageous embodiments.

In a first aspect of the present disclosure, a filter element is disclosed comprising a filtration media pack comprising a longitudinal axis, and a first open end cap arranged at a first axial end of the filtration media pack in a fluid tight manner and comprising a central opening. The first end cap is at least partially flexible and non-destructively, preferably elastically, deformable in a radial direction, for instance between a first shape (or state; for instance an undeformed state; corresponding to a first configuration of the element) and a substantially different second shape (or state; for instance a deformed state; corresponding to a second configuration of the element), and comprises
a. a circumferential seal surrounding the opening, wherein the circumferential seal comprises one or more radial seal extensions (seal extensions in the radial direction); and
b. one or more, preferably separate, reinforcement structures (or covering structures or shells) at least partially embedded into a material of the first end cap and preferably arranged in respective areas of the one or more radial seal extensions.

The one or more, preferably separate, reinforcement structures can be arranged at the respective locations of the radial seal extensions.

The reinforcement structures can be partially or fully embedded into a material of the first end cap.

According to preferred embodiments, the one or more reinforcement structures are partially embedded into a material of the first end cap, each reinforcement structure covering at least a portion of a corresponding radial extension of the seal, the portion comprising at least a radially inner or outer surface of the radial seal extension and preferably a first axial end surface of the radial extension, the first axial end surface projecting towards a second axial end of the filtration media pack.

It is an advantage that filter housings can be designed that allow for the installation of the disclosed filter element but that do not allow installation of standard filter elements, avoiding the use of a wrong filter element or a wrong installation thereof. It is a further advantage that the disclosed filter element can be used in relatively complex and compact housing configurations. Moreover, the disclosed filter element can be packaged in a more compact manner.

According to preferred embodiments, the filtration media pack is also flexible and nondestructively, possibly elastically, deformable, for instance in a radial direction. This can for instance be the case when the filtration media comprises pleated media arranged in a tubular manner.

Such filter elements do not comprise a rigid inner or outer liner, which would reduce or jeopardize the flexibility and elasticity of the first end cap. Inner and outer liners are typically provided to support the filtration media in use, when subject to substantial differential pressures.

It is an advantage that a filter element without integrated inner and/or outer liner comprises less material, can be manufactured more easily and at lower cost, and is more environmentally friendly.

In alternative embodiments, the filtration media pack is itself not flexible and/or non-destructively deformable, and the end cap is arranged and adapted for being flexible and non-destructively deformable. This can for instance be the case when the filtration media comprises fluted (also called z-type) media (which does not comprise inner and/or outer liners).

For the purpose of the present disclosure, the filter element, seal, end cap or filter media pack can non-destructively be deformed if a deformation of the respective item does not impact the integrity or performance thereof. Preferably the respective item is flexible and even more preferably the respective item is elastically deformable, within the boundaries needed for performing its function, e.g. for being reduced in size in order to enter a service or other opening of a filter housing which is initially too small or, to shape itself according to a filter housing cavity which has enough volume but which is shaped differently. An item is elastically deformable if it returns to its original undeformed state after having been deformed.

It is an advantage that an elastically deformable endcap automatically returns in its original position, resulting in a corresponding first configuration of the filter element, after the end cap and optionally filter media pack have been deformed, for instance for installing the filter element in an air cleaner housing or packaging.

For the purpose of the present disclosure, a circumferential seal (or sealing surface) is a seal (or sealing surface) that makes a circumference or is around a respective opening, such as the central opening or the first end cap respectively. Circumferential seals and associated circumferential sealing surfaces in a filter housing cooperate in order to provide an air-tight seal.

For the purpose of the present disclosure, a "composite structure" refers to a combination of a radial extension and associated reinforcement structure.

According to preferred embodiments, the circumferential seal is adapted and arranged for sealing in a radial direction, and the reinforcement structures are arranged and adapted for backing the radial seal extension of the circumferential seal.

According to preferred embodiments, a thickness of the seal measured in a direction perpendicular to the axial direction is substantially constant or constant.

According to preferred embodiments, a thickness of the seal measured in a direction perpendicular to the axial direction is within the range of 5mm to 20mm.

According to preferred embodiments, one or more or all radial seal extensions are extending radially outwardly. In cases where the thickness of the seal measured in a direction perpendicular to the axial direction is substantially constant or constant, the one or more radial seal extensions comprise a radially outward step.

According to preferred embodiments, one or more or all radial seal extensions are extending radially inwardly. In cases where the thickness of the seal measured in a direction perpendicular to the axial direction is substantially constant or constant, the one or more radial seal extensions comprise a radially inward step.

The relative height of the step of the radial seal extensions, measured radially between the inner surface of the seal in extended position and the virtual contour of the seal without seal extensions at the position of the respective seal extensions, is preferably between 25% and 200%, or between 50% and 150% of the constant thickness of the seal measured in a direction perpendicular to the axial direction. According to certain embodiments, the height of the step of the radial seal extensions is the same or about the same as the constant thickness of the seal measured in a direction perpendicular to the axial direction.

The absolute height of the step of the radial seal extensions can be for instance between 1mm and 40mm, or between 2mm and 20mm, or between 5mm and 15mm, not excluding larger values.

According to certain embodiments, one or more radial seal extensions are extending radially inwardly, and one or more radial seal extensions are extending radially outwardly. In certain embodiments, there are two radial seal extensions, one of them extending inwardly and the other extending outwardly.

According to preferred embodiments, the seal generally follows, for instance is in axial projection generally concentric with, an outer and/or inner contour of the filtration media pack, except for the one or more radial seal extensions.

According to preferred embodiments, the seal in the first configuration of the end cap can have a cross-section along a plane perpendicular to the filter element which is circular, rectangular, rounded rectangular, obround, oval or can have other regular shapes, except for the one or more radial seal extensions.

According to preferred embodiments, the two or more radial seal extensions are congruent, for instance having the same thickness (axial extent) and width (angular extent) and depth (radial extent; in the direction of the height of the step). For instance, the axial projections of the one or more radial seal extensions can be congruent. In alternative embodiment, the axial projections of two or more radial seal extensions differ in one or more of width and depth.

According to preferred embodiments, a minimal radial cross-dimension of the second shape of the first open end cap is at least 5%, or at least 10%, or at least 15%, or at least 20%, or at least 25%, or at least 30 % smaller than a minimal radial cross-dimension of the first shape.

According to preferred embodiments, a minimal radial cross-dimension of the second shape of the first open end cap is at least 5mm, or at least 10 mm, or at least 15 mm, or at least 20 mm, or at least 25 mm or at least 5 cm smaller than a minimal radial cross-dimension of the first shape of the first open end cap.

According to preferred embodiments, the filter element comprises only two radial seal extensions which are arranged at diametrically opposed sides of the circumferential seal.

According to preferred embodiments, the distance between the (e.g. two) radial seal extensions in the second shape is at least 5%, or at least 10%, or at least 15%, or at least 20%, or at least 25%, or at least 30 % smaller than the distance in the first shape. For instance, the distance between the (e.g. two) radial seal extensions in the second shape is at least 5mm, or at least 10 mm, or at least 15 mm, or at least 20 mm, or at least 25 mm or at least 5 cm smaller than the distance in the first shape.

In certain embodiments, the seal extensions can be brought closer to one another by deforming the seal, for instance in order to install the seal extensions below an undercut (of for instance a cavity) or in a cavity in a filter housing, after which the seal extensions snap outwardly into a predetermined position in a filter housing when released.

According to preferred embodiments, distance between the (e.g. two) radial seal extensions in the second shape is at least 5%, or at least 10%, or at least 15%, or at least 20%, or at least 25%, or at least 30 % larger than the distance in the first shape. For instance, the distance between the (e.g. two) radial seal extensions in the second shape is at least 5mm, or at least 10 mm, or at least 15 mm, or at least 20 mm, or at least 25 mm or at least 5 cm larger than the distance in the first shape.

In certain embodiments, the distance between the seal extensions can be increased by deforming the seal, for instance in order to install the seal extensions below an undercut (of for instance a cavity) or in a cavity in a filter housing, after which the seal extensions snap inwardly into a predetermined position in a filter housing when released.

According to preferred embodiments, the first end cap can be deformed in a radial direction (for instance for more than 5% or more than 10% or more than 15%) by radial force components which are smaller than 40 N, or smaller than 30 N, or smaller than 20 N or smaller than 10N.

According to preferred embodiments, the reinforcement structures are made of a relatively hard material. Preferably, the reinforcement structures comprise materials which are from medium hard to hard and up to extra hard. To express and measure the hardness of a material, the known shore-A scale or shore-D scale can be used. In embodiments, the reinforcement structures have a hardness either measured on a shore-A scale between 60 and 100, preferably between 70 and 100, more preferably between 80 and 100 or, alternatively, when measured on a shore-D scale between 0 and 100, preferably between 15 and 100, more preferably between 30 and 100.

In embodiments, the reinforcement structures comprise or are made of hard plastic.

In other embodiments, the reinforcement structures comprise a thermoplastic, such as for example acrylonitrile butadiene styrene (ABS), polypropylene (PP), polyamide (PA) or polyvinyl chloride (PVC).

The deformable end cap is thus not (e.g. radially) deformable in the regions of the reinforcement structures or shells, but is deformable outside of the regions of the shells.

According to preferred embodiments, each reinforcement structure comprises a hollow cavity in a second axial end surface thereof, the second axial end surface projecting (or being exposed) in the same direction as the first end of the filtration media pack. According to preferred embodiments, the second axial end surface is opposed to the first axial end surface in axial direction.

Preferably, the hollow cavity is blind and has an axis parallel to the longitudinal axis of the filter element, having an opening that points away from the media pack.

According to preferred embodiments, the filtration media pack comprises pleated filtration media, preferably arranged in a tubular manner, and is flexible and preferably elastically deformable. For instance, the filtration media comprises one or more layers selected from the group of media layers and media support layers. The latter provide support for keeping the media together and in place without pressure difference, and differ from liner structures in that liners are suitable for keeping the filtration media place during use and when subject to substantial pressure difference.

Preferably, the pleated media is arranged in a tubular manner having pleat direction parallel to a longitudinal filter element axis in at least the first configuration of the element.

According to other embodiments, the filtration media pack is of the fluted or z-type and can for instance be wound or stacked.

According to preferred embodiments, the first end cap and preferably also the circumferential seal, is/are manufactured by a potting process, preferably a foamed polyurethane potting process, whereby a portion of the one or more separate reinforcement structures are embedded in the first end cap.

Preferably, the circumferential seal is formed integrally with the first end cap.

Preferably, the circumferential seal comprises or consists of polyurethane (e.g. foamed polyurethane).

In certain embodiments, the first end cap and/or the circumferential seal comprises or consists of TPE (Thermoplastic elastomer).

According to preferred embodiments, the first circumferential seal comprises a 2-fold rotational symmetry with respect to the filtration media pack axis.

According to certain embodiments, the filter element comprises an axially extending groove in a radially outer surface of the media pack, preferably extending from the first end to the second end.

According to certain embodiments, the filter element comprises a second end cap at a second end of the filtration media pack. The second end cap can be a closed or an open end cap. In case the second end cap is open, it can comprise a central opening and a second circumferential seal. The second end cap can be rigid or can be flexible and non-destructively deformable, and for instance elastically deformable. The second end cap and optionally second circumferential seal can comprise the same materials as the first end cap, and can generally be manufactured in the same way as the first end cap.

In certain embodiments the second end cap can be configured according to any of the embodiments disclosed in relation to the first end cap.

In a second aspect of the present disclosure, a package is disclosed comprising a box, bag or sleeve comprising a filter element according to any of the embodiments of the first aspect, wherein the filter element is kept in an elastically deformed configuration by an inner sidewall of the box, bag or sleeve.

In a third aspect of the present disclosure, filter assemblies are disclosed that are configured for making use of the filter elements according to certain embodiments of the first aspect of the present disclosure in an advantageous manner.

Generally, a filter assembly is disclosed comprising a filter housing adapted and arranged for receiving a filter element according to any of the embodiments of the first aspect, wherein the filter housing comprises one or more undercuts or cavities for receiving the composite structures of the filter element, whereby the associated filter element can only be installed (and thus the composite structures can only be received) by deforming the first end cap of the filter element.

According to a certain embodiment, a filter assembly is disclosed comprising a filter housing having an inlet opening and an outlet opening, and an internal cavity receiving a filter element according to any of the embodiments of the first aspect in a sealing manner thereby dividing the internal cavity into a unfiltered air volume fluidly connected to the inlet and a filtered air volume fluidly connected to the outlet by the filtration element, wherein the filter housing comprises a main filter housing and a housing cover, wherein the housing cover comprises an outer liner structure for the filter element having a longitudinal axis and projecting from the housing cover into the internal cavity, the outer liner structure receiving the filter element and comprising a proximal end at the housing cover and an opposed distal end, and the outer liner structure comprising one or more cavities at its distal end, adapted and arranged for receiving respective one or more composite structures embodied by the one or more radial seal extensions and associated reinforcement structures.

In certain embodiments, the filter element comprises an axially extending groove in a radially outer surface of the media pack, and wherein the outer liner structure comprises a corresponding axially extending rib or guiding structure arranged on an internal surface of the outer liner.

According to a certain embodiment, a filter assembly is disclosed comprising a filter housing having an inlet opening and an outlet opening, and an internal cavity receiving a filter element according to any of the embodiments of the first aspect in a sealing manner thereby dividing the internal cavity into a unfiltered air volume fluidly connected to the inlet and a filtered air volume fluidly connected to the outlet by the filtration element, wherein the filter housing comprises a main filter housing and a housing cover, wherein the main filter housing comprises a filter servicing opening defined by a circumferential end portion of the main filter housing, wherein the circumferential end portion comprises one or more receiving cavities for receiving respective composite structures embodied by respective radial seal extensions and associated reinforcement structures of the filter element.

In certain embodiments, the reinforcement structures comprise radially outwardly extending ribs, and the cavities comprise corresponding cavity slots for receiving the radially outwardly extending ribs and allowing the radially outwardly extending ribs to pass though and to be exposed outside of the main housing, wherein the housing cover comprises latches, the latches latching on respective exposed portions of the radially outwardly extending ribs.

According to a certain embodiment, a filter assembly is disclosed comprising a filter housing having an inlet opening and an outlet opening, and an internal cavity receiving a filter element according to any of the embodiments of the first aspect in a sealing manner thereby dividing the internal cavity into a unfiltered air volume fluidly connected to the inlet and a filtered air volume fluidly connected to the outlet by the filtration element, wherein the filter housing comprises a main filter housing and a housing cover, wherein the main filter housing comprises an inner liner for the filter element having a longitudinal axis and projecting from the main housing into the internal cavity, the inner liner structure being received by an internal cavity of the filter element and comprising a proximal end at the main housing and an opposed distal end, and the inner liner comprising one or more cavities at its distal end, adapted and arranged for receiving respective one or more composite structures embodied by the one or more radial seal extensions and associated reinforcement structures.

According to a certain embodiment, a filter assembly is disclosed comprising a filter element according to any of the embodiments of the first aspect and a separate, removable outer liner for the filter element, wherein the outer liner extends in an axial direction between a first axial end and a second axial end and comprises an internal volume for receiving the filter element, wherein the outer liner comprises one or more cavities at the first axial end receiving the one or more respective composite structures embodied by respective radial seal extensions and associated reinforcement structures of the filter element.

According to a certain embodiment, a filter assembly is disclosed comprising a filter element according to any of the embodiments of the first aspect and a separate, removable inner liner for the filter element, wherein the inner liner extends in an axial direction between a first axial end and a second axial end, and the filter element comprises an internal volume for receiving the inner liner, wherein the inner liner comprises one or more cavities at the first axial end receiving the one or more respective composite structures embodied by respective radial seal extensions and associated reinforcement structures of the filter element.

Preferably, in any of the above filter assembly embodiments, one or more cavities form an undercut portion preventing the composite structures from being inserted into the cavities without deforming the filter element.

According to a certain embodiment, a filter assembly is disclosed comprising a filter housing having an inlet opening and an outlet opening, and an internal cavity receiving a filter element according to any of the embodiments of the first aspect in a sealing manner thereby dividing the internal cavity into a unfiltered air volume fluidly connected to the inlet and a filtered air volume fluidly connected to the outlet by the filtration element, wherein the filter housing comprises a main filter housing and a housing cover, wherein the housing cover comprises an outer liner structure for the filter element having a longitudinal axis and projecting from the housing cover into the internal cavity, the outer liner structure receiving the filter element and comprising a proximal end at the housing cover and an opposed distal end, and the outer liner structure comprising one or more undercut portions at its distal end, adapted and arranged for preventing the composite structures embodied by the one or more radial seal extensions and associated reinforcement structures from passing from one side to the opposed side of the undercut portions without deforming the filter element.

In certain embodiments, the filter element comprises an axially extending groove in a radially outer surface of the media pack, and wherein the outer liner structure comprises a corresponding axially extending rib or guiding structure arranged on an internal surface of the outer liner.

### Short description of the drawings

These and further aspects of the present disclosure will be explained in greater detail by way of example and with reference to the accompanying drawings in which:
Fig.1 (a) (b), Fig. 2 to Fig. 4, Fig. 5(a) to (c), Fig. 6(a) (b), Fig. 7, and Fig. 8 (a) (b) illustrate a first preferred embodiment of the present disclosure.
Fig. 1(a) and (b) are perspective views of a filter assembly according to a first preferred embodiment of the present disclosure.
Fig.2 is a top perspective view of a filter element of the first preferred embodiment installed in an outer liner of an outer liner cover according to the first preferred embodiment of the present disclosure.
Fig.3 is an axial cut view of a filter assembly according to a first preferred embodiment of the present disclosure.
Fig.4 is a perspective axial cut view of a filter assembly according to a first preferred embodiment of the present disclosure.
Fig.5 (a) and (b) are perspective views of a filter element according to a first preferred embodiment of the present disclosure. Fig. 5 (c) is a perspective cut view.
Fig.6 (a) and (b) and Fig. 7 are partially cut perspective views of a filter assembly according to a first preferred embodiment of the present disclosure.
Fig.8 (a) is a partially cut perspective view of a main housing part according to a first preferred embodiment of the present disclosure.
Fig.8 (b) is a partially transparent perspective view of a main housing part according to a first preferred embodiment of the present disclosure.
Fig.9 (a) to (c) illustrate a preferred production process for a filter element according to the first and other preferred embodiments.
Fig.10 (a) and (b) illustrate optional features for a housing cover according to the first and other preferred embodiments.
Fig.11 (a) is a partial cut perspective view and Fig. 11 (b) a perspective view of a filter assembly according to a first preferred embodiment of the present disclosure, illustrating advantages of aspects of the present disclosure.
Fig.12 (a) and (b) are perspective views of an assembly according to a second preferred embodiment of the present disclosure. Fig. 12(d) is an axial cut view, and Fig. 12 (c) is a detail thereof.
Fig.13 (a) to (c) are perspective views of an assembly according to a third preferred embodiment of the present disclosure.
Fig.14 (a) to (c) are perspective views of main housing with filter element, filter element and outer liner cover respectively, according to the third preferred embodiment of the present disclosure.
Fig.15 (a) and (b) are perspective views of an assembly according to a fourth preferred embodiment of the present disclosure. Fig. 15(d) is an axial cut view, and Fig. 15(c) is a detail thereof.
Fig.16 (a) and (e) are perspective views of an assembly according to a fifth preferred embodiment of the present disclosure. Fig. 16(b) is a detail of Fig. 16 (a). Fig. 16(c) is an axial cut view, and Fig. 16(d) is a detail thereof.
Fig.17 (a) and (b) are perspective views of an assembly according to a sixth preferred embodiment of the present disclosure.
Fig.18 (a) and (b) are perspective views of an assembly according to a seventh preferred embodiment of the present disclosure.
Fig.19 (a) and (b) are perspective views of an assembly according the first preferred embodiment of the present disclosure, illustrating further optional features.
Fig.20 is a bottom view of an assembly according to an eighth preferred embodiment of the present disclosure.
Fig.21 to 23 are perspective views of alternative filter elements for use in preferred assemblies of the present disclosure. Fig. 23 also illustrates a possible interaction with a main housing part.

### Detailed description of preferred embodiments

The present disclosure will be described in terms of specific embodiments, which are illustrative of the disclosure and not to be construed as limiting. It will be appreciated by persons skilled in the art that the present disclosure is not limited by what has been particularly shown and/or described and that alternatives or modified embodiments could be developed in the light of the overall teaching of this disclosure. The drawings described are only schematic and are non-limiting.

Use of the verb "to comprise", as well as the respective conjugations, does not exclude the presence of elements other than those stated. Use of the article "a", "an" or "the" preceding an element does not exclude the presence of a plurality of such elements. Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the disclosure described herein are capable of operation in other sequences than described or illustrated herein. Reference throughout this specification to "one embodiment" or "an embodiment" means that a particular feature, structure or characteristic described in connection with the embodiments is included in one or more embodiments of the present disclosure. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Although a number of the drawings presented and discussed below are specifically addressing embodiments of a filter element for filtering air, the present disclosure is not limited thereto.

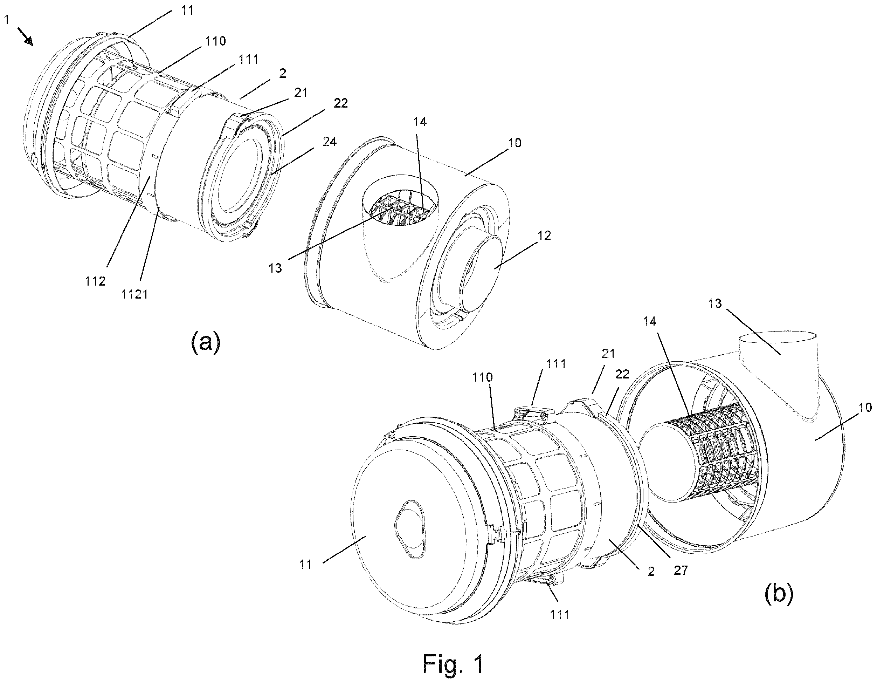

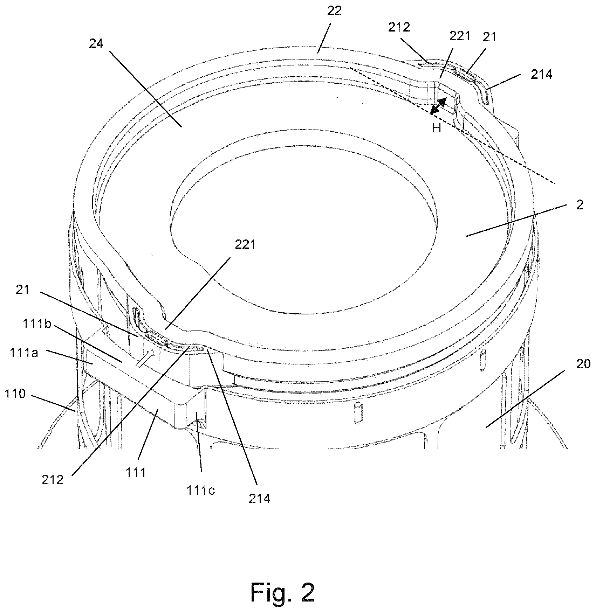

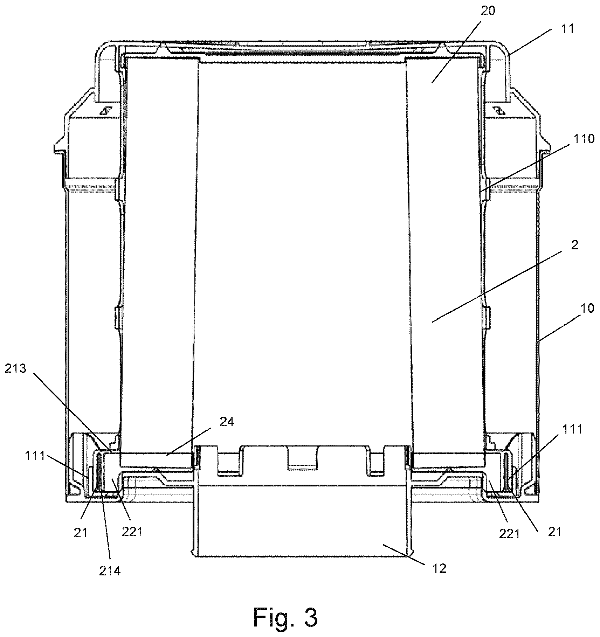

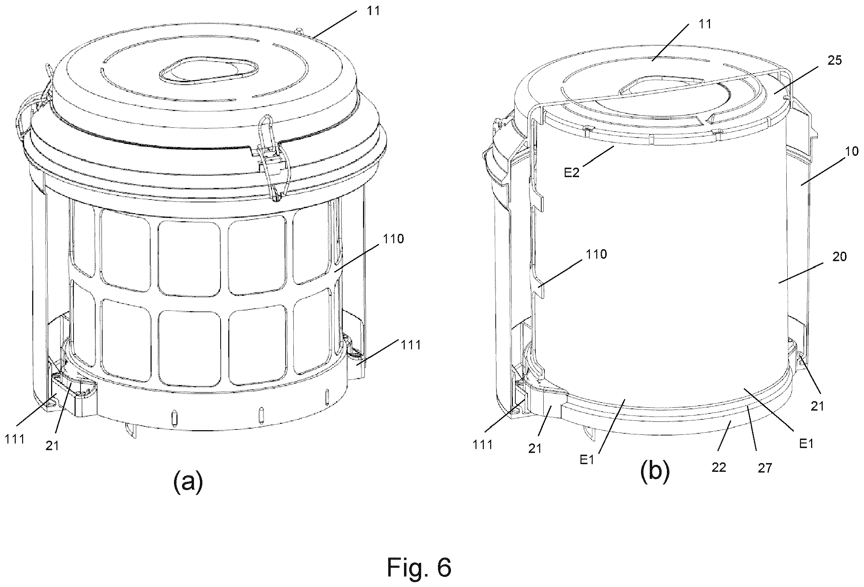

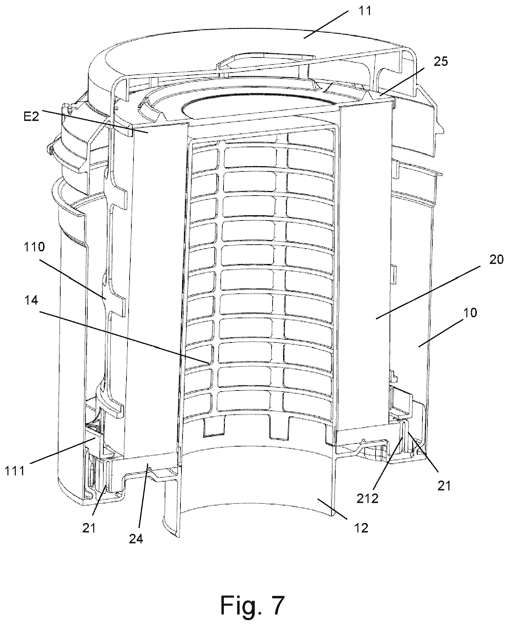

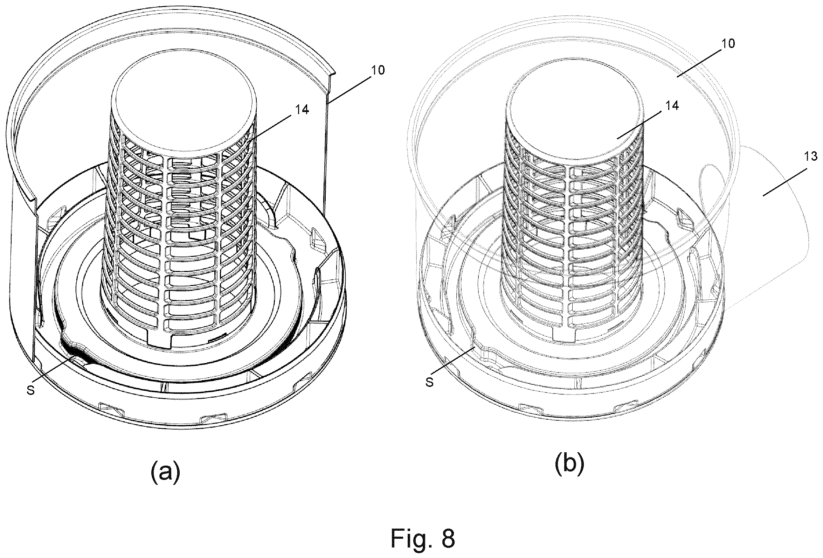

Fig.1 (a) (b), Fig. 2 to Fig. 4, Fig. 5(a) to (c), Fig. 6(a) (b), Fig. 7, and Fig. 8 (a) (b) illustrate a first preferred embodiment of the present disclosure.

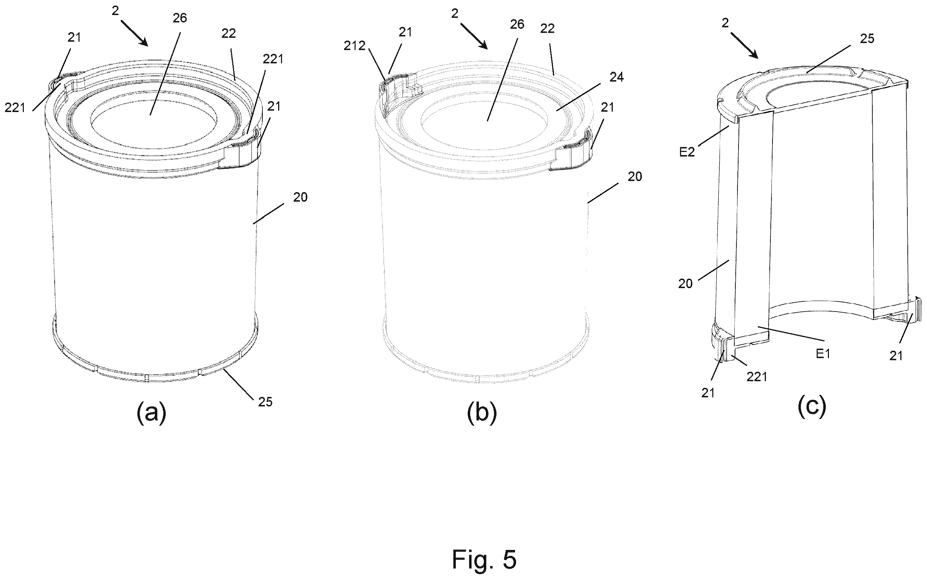

Figure 5 (a) to (c) illustrate a filter element 2 according to a first preferred embodiment of the present disclosure. Filter element 2 comprises a filtration media pack 20 comprising a longitudinal axis, a first open end cap 24 arranged at a first axial end E1 of the media pack 20 in a fluid tight manner and comprises a central opening 26. At the second axial end E2 of the filtration media pack 20 a second end cap 25 is provided in a fluid tight manner, which is a closed end cap 25. The first end cap 24 is at least partially flexible, elastically and nondestructively deformable in at least a radial direction, for instance between a first shape and a substantially different second shape. The filter element further comprises a circumferential seal 22 surrounding the central opening 26. The circumferential seal comprises two radial seal extensions 221. It further comprises two separate reinforcement structures 21 partially embedded into the material of the first end cap 24. Each reinforcement structure 21 covers at least a portion of a corresponding radial extension 221 of the seal 22, comprising the radial outer surface 215 and the first axial end surface 213 of the radial extension 221. The first axial end surface 213 projects towards the second axial end E2 of the filtration media pack 20.

Circumferential seal 22 is adapted and arranged for sealing in a radially inward direction. The reinforcement structures 21 are arranged and adapted for backing the radial extension 221 of the circumferential seal 22. The thickness of seal 22 measured in a direction perpendicular to the axial direction is constant. At the location of the two reinforcement structures 21, seal 22 thus makes respective radially outward steps. The seal 22 generally follows the outer contour of the filtration media pack 20, except at the two radial seal extensions 221. Axial projections of the seal 22 and the outer wall of the filtration media pack are concentric, except for the portions corresponding to the two radial seal extensions 221.

The composite structures comprising the radial seal extensions 221 and reinforcement structures 21 are arranged at diametrically opposed sides of the circumferential seal 22.

Each reinforcement structure 21 comprises one or more hollow cavities 212 in a second axial end surface 214 thereof, the second axial end surface 214 projecting in the same direction as the first end of the filtration media pack E1. These hollow cavities 212 play a role in the production process and are exposed at a first end of filter element 2.

The filtration media pack 20 comprises pleated filtration media arranged in a tubular, cylindrical manner, and is flexible. It does not comprise rigid inner or outer liners 14, 110.

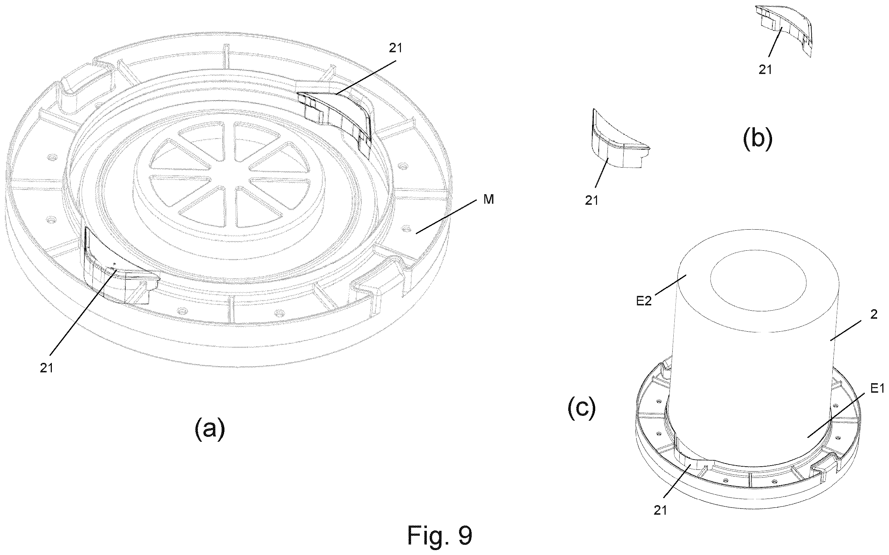

The end cap 24 is a potted polyurethane end cap, which is molded onto the pleated filtration media 20 and has the seal 22 integrated. A suitable molding process is illustrated in Fig. 9. Mold M (Fig. 9 (a)) is provided which defines the shape of the end cap 24, the seal 22 and the radial seal extensions 221. The mold M comprises coupling structures (such as protrusions or pins) at predetermined locations, for being received by the hollow cavities 212 of the reinforcement structures 21 (Fig. 9(b)). As a result, the separate reinforcement structures 21 (e.g. made of a hard plastic material) can be positioned in a predetermined and stable position in the mold M. The pleated filtration media pack 20 is positioned into the mold (Fig. 9(c)) with a first axial end thereof. Finally, a polyurethane material is poured into the mold and cured to form the end cap 24, bond the filtration media to the end cap 24 and embed a portion of the reinforcement structures 21.

The end cap 24 (together with the pleated filtration media 20) is elastically deformable, meaning that when it is deformed and released, it returns to its original shape. The function thereof will now be explained in relation to the description of the assembly as depicted in Fig. 1(a) (b), Fig. 2 to Fig. 4 and Fig. 6 to Fig. 8.

Also, optionally, the first end cap 24 further comprises a peripheral circumferential chamfered, pushing surface 27 positioned adjacent to, preferably directly adjacent to, that surrounds the outer wall of the media pack 20, and is interrupted only by respective portions of the reinforcement structures 21. The chamfered pushing surface 27 faces the second end E2 of the media pack 20 and extends from a position radially closer to the outer wall of the filtration media pack 20 to a position radially further removed from the outer wall of the filtration media pack 20 when moving towards the first end of the filtration media pack 20 or filter element 2.

Alternatively, also optionally, the first end cap 24 further comprises a peripheral circumferential pushing surface 27, that faces the second end E2 of the media pack 20 and is positioned adjacent to, preferably directly adjacent to, and surrounding the outer wall of the media pack 20 and is interrupted only by respective portions of the reinforcement structures 21. This pushing surface 27 can be planar and substantially perpendicular to the filtration media pack axis or filter element axis. The pushing surface can for instance also comprise a circumferential groove opening towards the second end E2 of the filtration media pack 20.

A first preferred embodiment of an assembly for use with the disclosed filter elements comprises a filter housing 10, 11 having an inlet opening 13 and an outlet opening 14, and an internal cavity receiving the disclosed filter element 2 in a sealing manner thereby dividing the internal cavity into an unfiltered air volume fluidly connected to the inlet and a filtered air volume fluidly connected to the outlet by the filtration element. The filter housing comprises a main filter housing 10 and a housing cover 11. The housing cover 11 comprises an outer liner structure 110 for the filter element 2 having a longitudinal axis and projecting from the housing cover 11 into the internal cavity. The outer liner structure 110 receives the filter element 2. The outer liner structure 110 comprises a proximal end at the housing cover 11 and an opposed distal end 112, and comprises two cavities 111 at its distal end, adapted and arranged for receiving the respective composite structures 21, 221 embodied by the two radial seal extensions 221 and associated reinforcement structures 21. The cavities 111 both extend radially outward from the distal end of the outer liner structure 110 and are provided at diametrically opposed sides of the distal end of the outer liner structure 110. Each cavity (see Fig. 2) is defined by or comprises an upper or axial end surface or wall 111b positioned flat with the distal end of the outer liner structure 110, that embodies an undercut. The cavity 111 further comprises a radially outward wall 111a and sidewalls 111c connecting the walls 111b and 111a to the distal end of the outer liner structure 110. The cavities 111 are open towards the internal volume of the outer liner structure 110 and preferably also in a direction towards the second end E2 of the filter media pack 20, i.e. towards the proximate end of the outer liner structure 110 at the cover side (the latter to simplify removal of the composite structures from the respective cavities during servicing). At the opposite side of the undercut 111b, and between the opening towards the internal volume and the opening towards the second end E2 of the filter media pack 20, a pushing rib 111d is provided, which is part of the framework of the outer liner structure 110. Axial projections of the cavities 111 and of the radial sealing surface of the seal 22 do not overlap.

When providing a new filter element during servicing, filter element 2 is first installed in the outer liner structure 110 (see Fig. 2). The first end cap 24 of filter element 2 is therefore deformed by pushing each of the composite structures inwardly. The composite structures are moved below the undercut wall 111b and into cavity 111, and are released again, allowing the end cap to snap back outwardly into its original configuration. This process can for instance be applied to one composite structure at a time or simultaneously to both composite structures, and results in the filter element 2 being fixed into the outer liner structure 110 and thus housing cover 11. Each composite structure is thereby trapped in the axial direction between the undercut wall 111b and the pushing rib 111d.

The housing cover 11, including the filter element 2, can then be placed on the main housing 10, whereby the filter element 2 is installed in the main housing 10 as follows. The main housing 10 comprises an inner liner structure 14, which is aligned with the housing outlet 12 and projects into the internal volume of the main housing along an inner liner axis. The inner liner 14 receives filter element 2. On an inner surface of the main housing 10, adjacent to the outlet 12, a sealing surface S is provided which is adapted and arranged for sealing against the seal 22 when the filter element 2 is finally installed. It will be appreciated by the skilled person that when a force in the axial direction is applied on the cover 11 during the positioning of the cover and closing of the filter housing, portions of the cavity 111, in this case mainly the pushing rib 111d, will exert a force on the reinforcement or covering structure 21 and push the radial seal in place such that it seals against the sealing surface S, without a risk of damaging the radial seal extensions 221 of the seal 22.

Further, optionally, in combination with the presence of a pushing surface 27 or chamfered pushing surface 27 of the end cap 24 of the respective filter element 2, the cylindrical outer liner structure 110 in the region outside of the cavities 111 is preferably adapted and predetermined for pushing against the pushing surface 27 or chamfered pushing surface 27 of the end cap 24 of the respective filter element 2, to push the seal 22 into place in the region outside of the cavities 11 and/or to provide a seal backing of the seal in the region outside of the cavities 11 when the housing cover 11 is closed.

In combination with the presence of a chamfered pushing surface 27, the inner surface of the outer liner structure 110 preferably comprises one or more complementary chamfered surfaces (for instance a single complementary circumferential chamfered surface, interrupted in the regions of the composite structures) that is adapted and arranged for exerting pressure on the chamfered pushing surface 27.

The pushing surface 27 can for instance also comprise a circumferential groove opening towards the second end E2 of the filtration media pack 20 for receiving the distal end of the outer liner structure 110 in the region outside the composite structures or radial seal extensions 221.

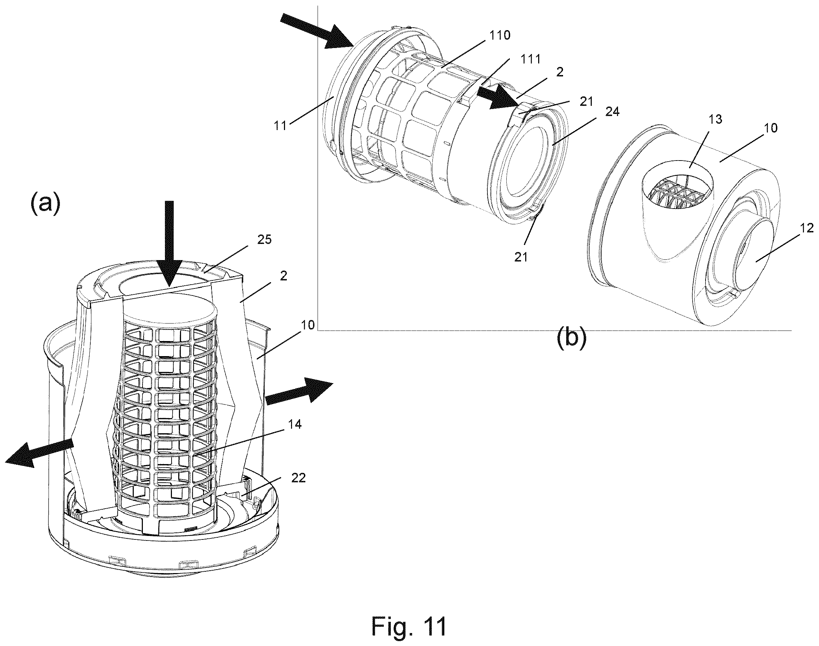

The above filter assembly 1 and installation process of the associated filter element 2, comprising installing the filter element 2 first in the housing cover 11 which comprises an outer filter liner 110 as described, before closing the cover and thereby installing the filter element, has the advantage that no force, especially no axial force is applied on the (e.g. flexible) filter element 2 itself, which could deform or damage the filtration media 20 rather than allowing the exertion of enough force to bring the radial seal 22 into final sealing position. Instead, the axial force applied on the filter cover 11 is passed via the outer liner structure 110 (liners, both inner and outer, typically comprises a rigid material such as for instance a hard plastic material) directly onto the composite structures having a hard plastic reinforcement structure or shell 21. The plastic reinforcement structures 21 protect the polyurethane radial seal extensions 221 from being cut or damaged during that process. This is illustrated in Fig. 11(a) (b).

Fig. 7 illustrates the advantage that a wrong filter element, for instance a filter element 2 with an end cap which cannot be at least partially deformed in the radial direction would be installed first in the housing 10, as it would not be possible to install it first in the outer filter liner 110 of the housing cover 11. The housing cover 11 would obviously not be able to close the housing as the cavities 111, especially the undercut would be blocked by the radial seal extensions 221 of the seal 22 before reaching its intended position.

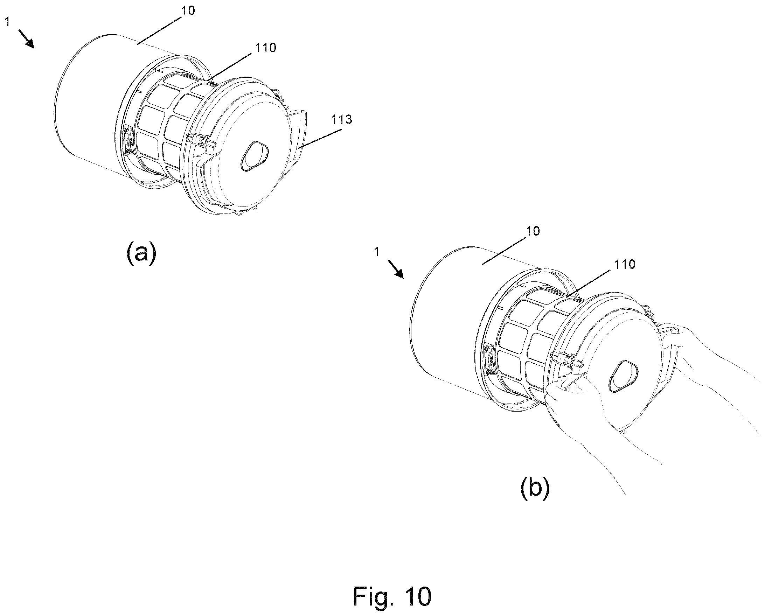

Fig.10 (a) and (b) illustrate the optional feature of having one or more handles 113 on the housing cover 11 of the first preferred assembly embodiment of the present disclosure. Preferably, a pair or handles 113 are provided at radially opposite sides of the housing cover to allow an easy removal of the cover and installed filter element.

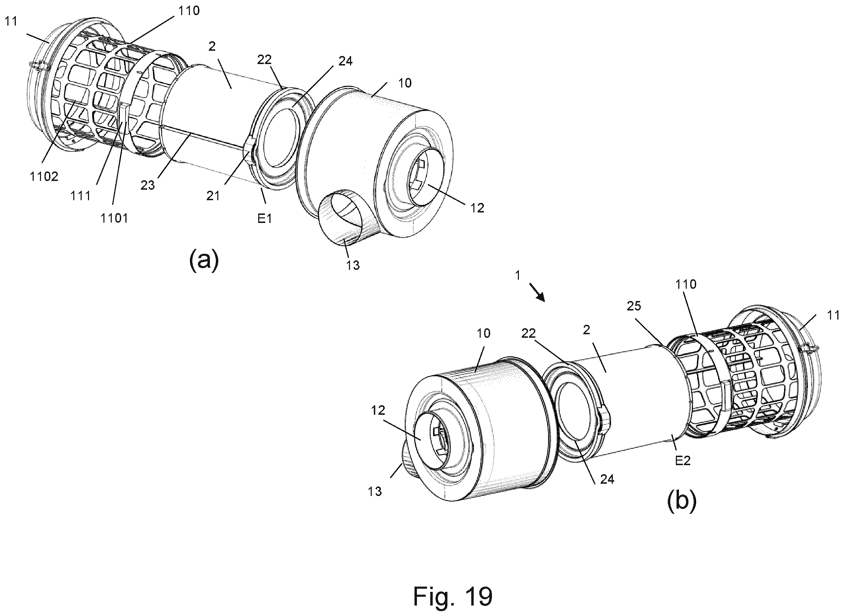

Fig.19 (a) and (b) illustrate a further optional alignment feature for the filter element 2 and for the first preferred filter assembly embodiments. The filter element 2 comprises an axially extending groove 23 (for instance V- or U-shaped) in a radially outer surface of the filtration media pack 20, preferably extending from the first end E1 to the second end E2, for instance at an angular position aligned with, for instance centrally positioned with respect to, one of the composite structures 221, 21. The second end cap 25 also comprises a corresponding cut-out (for instance V- or U-shaped) aligned with the groove 23. In other words, the groove 23 extends though the second end cap 25. At the first end E1 of the filtration media pack 20, the groove 23 can end and abut one of the composite structures 221, 21. The outer liner structure 110 comprises a corresponding axially extending rib or guiding structure 1102 arranged on an internal surface of the outer liner 110. The groove 23 receives by the rib 1102 when the filter element 2 is received by the outer liner structure 110, simplifying the alignment and insertion of the filter element 2 in the housing cover 11.

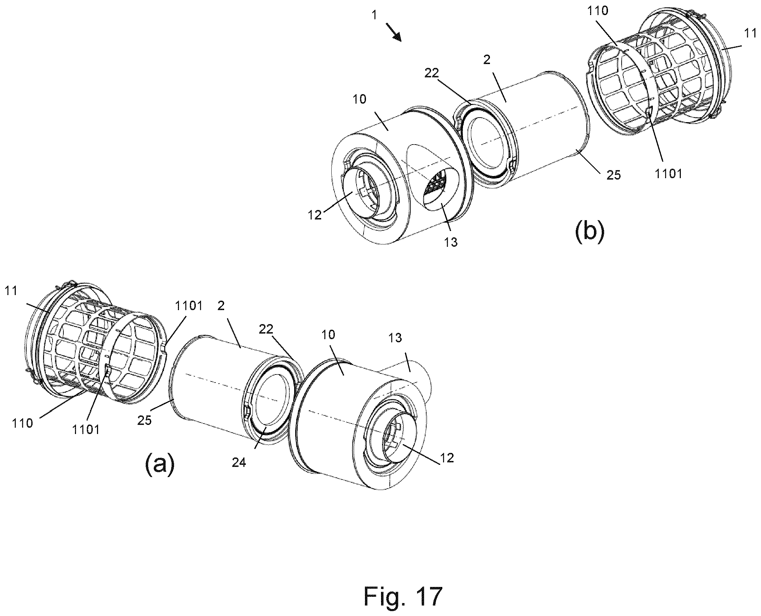

Fig.17 (a) and (b) are perspective views of an assembly according to a further preferred embodiment of the present disclosure. The filter element 2 differs from the filter element 2 as described in relation with the first preferred embodiment in that the radial seal extensions 221 and corresponding reinforcement or shell structures 21 are directed radially inwards. The shell structures 21 are embedded in the polyurethane first end cap 24, which is elastically deformable. The second and cap 25 and filter media pack 20 are also elastically deformable. The housing cover differs from the one described in relation to the first preferred embodiment in that the outer liner 110 comprises an undercut surface 1101 that is directed radially inwardly from the inner surface of the outer liner structure 110. The seal 22 is adapted and arranged for sealing radially inwardly on a complementary sealing surface S in the housing, adjacent to the outlet opening 13. The radially outer surface 215 of the radial seal extensions 221 is backed by the respective shell structures 21. The housing can further be adapted and arranged such that the distal end of the outer liner structure 110 provides a backing for the complementary portions of the seal 22, when the cover 11 is correctly installed on the main housing 10. The undercut portions 1101 are designed and arranged such that they provide backing to the composite structures 221, 21.

When installing the filter element 2 into the housing 10,11, the filter element 2 is first installed in the outer liner structure 110 of the housing cover 11. The second 25 end cap of the filter element 2 is inserted first until the first end cap 24 reaches the undercut 1101, by first deforming the filer element 2. Then the first end cap 24 is deformed by pushing each of the composite structures inwardly. The composite structure is moved below the undercut 1101, and released again, allowing the first end cap 24 to snap back outwardly into its original configuration. This process can for instance be applied to one composite structure at a time or simultaneously to both composite structures, and results in the filter element 2 being fixed into the outer liner structure 110 and thus housing cover 11.

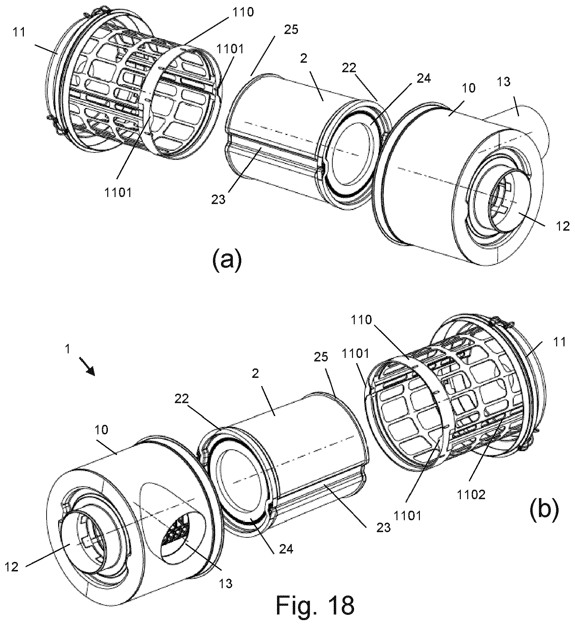

Fig.18 (a) and (b) illustrate an assembly according to a further preferred embodiment of the present disclosure, which is similar to the embodiment described in relation with Fig. 17(a) (b), but allows the filtration media pack 20 and the second end cap 25 to be non-deformable, as the filter element 2 comprises two axially extending grooves 23 (for instance V- or U-shaped) in a radially outer surface of the filtration media pack 20, at diametrically opposed positions thereof, preferably extending from the first end E1 to the second end E2, for instance at an angular position aligned with, for instance centrally positioned with respect to, the two composite structures 221, 21. The second end cap 25 also comprises a corresponding cut-outs (for instance V- or U-shaped) aligned with the grooves 23. In other words, the grooves 23 extends though the second end cap 25. At the first end E1 of the filtration media pack 20, the grooves 23 can end and abut one of the composite structures 221, 21. The outer liner structure 110 comprises two corresponding axially extending ribs or guiding structures 1102 arranged on an internal surface of the outer liner 110, at diametrically opposed positions. The grooves 23 receive the guiding structures 1102 when the filter element 2 is received by the outer liner structure 110, simplifying the alignment of the filter element 2 in the housing cover 11. Axial projections of the undercuts 1101 and of the grooves 23 do not overlap such that the undercuts 1101 do not interfere with the insertion of the filter element 2 into the outer liner 110 until the moment where the composite structure reaches the undercut 1101. Then the first end cap 24 is deformed by pushing each of the composite structures inwardly. The composite structure is moved below the undercut 1101, and released again, allowing the end cap to snap back outwardly into its original configuration. This process can for instance be applied to one composite structure at a time or simultaneously to both composite structures, and results in the filter element 2 being fixed into the outer liner structure 110 and thus housing cover 11.

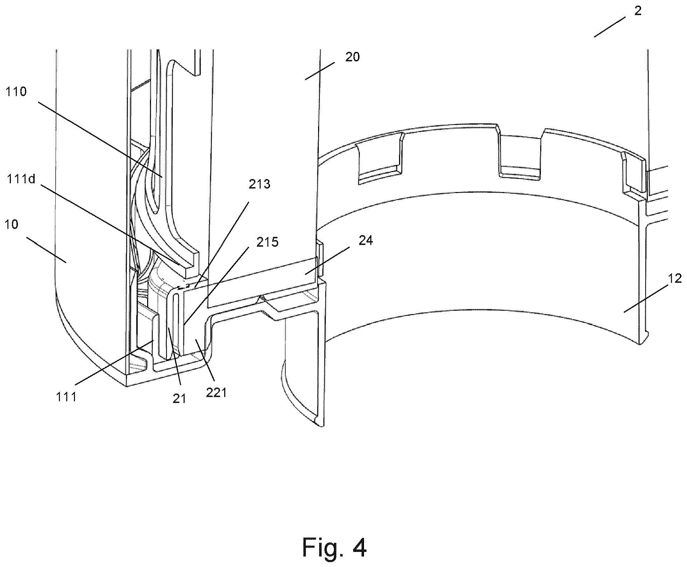

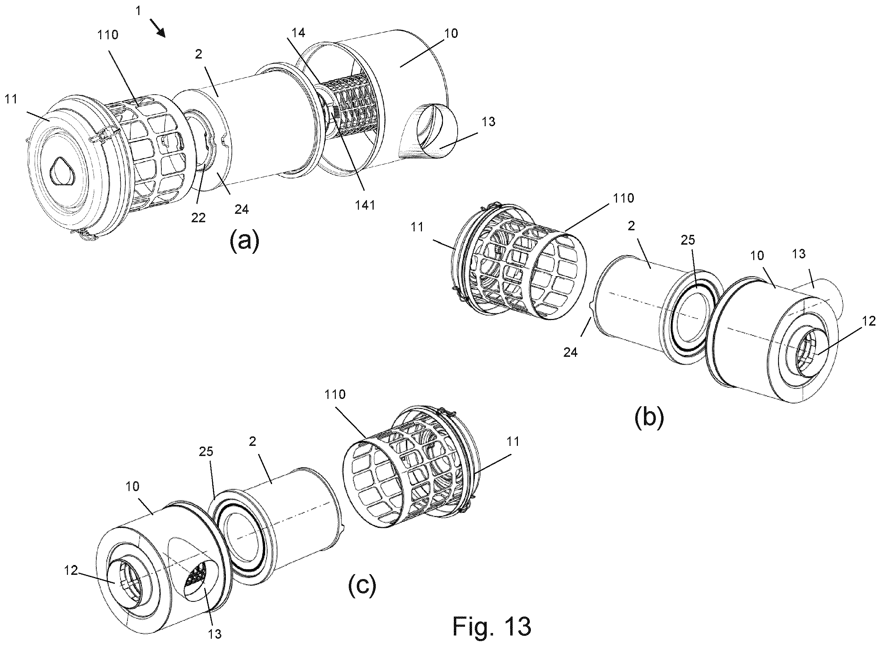

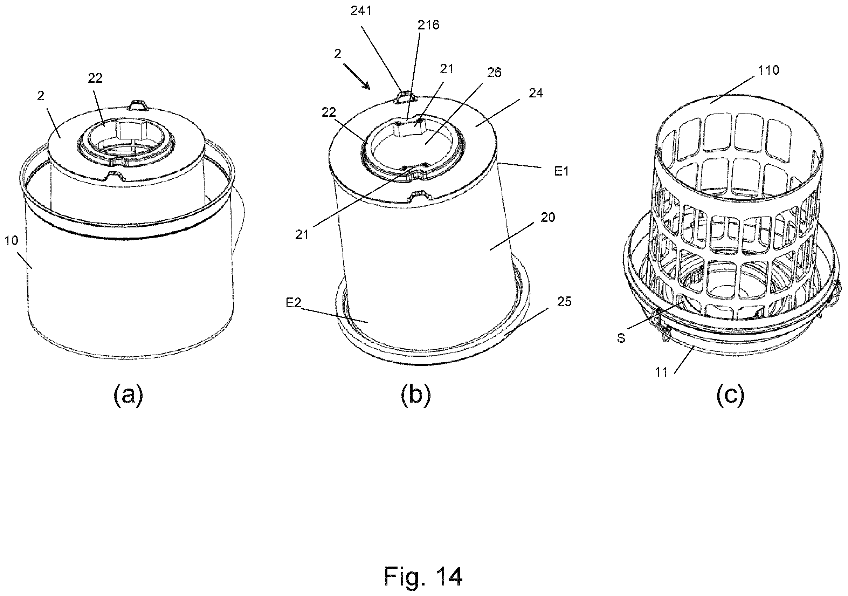

Fig.13 (a) to (c) Fig.14 (a) to (c) illustrate an assembly according to a further preferred embodiment of the present disclosure. The filter element 2 (see Fig. 4 (b)) comprises a filtration media pack 20 comprising a longitudinal axis, a first open end cap 24 arranged at a first axial end E1 of the media pack 20 in a fluid tight manner and comprises a central opening 26. At the second axial end E2 of the filtration media pack 20 a second end cap 25 is provided in a fluid tight manner, which is also an open end cap 25. The first end cap 24 is at least partially flexible, elastically and nondestructively deformable. The first end cap 24 further comprises a generally round circumferential seal 22 surrounding the central opening 26, except for two radial seal extensions 221, which extend radially inwardly from the rest of the seal 22. It further comprises two separate reinforcement structures 21, made of hard plastic, partially embedded into the material of the first end cap 24. Each reinforcement structure 21 covers at least a portion of a corresponding radial seal extension 221, comprising the radially inner surface 216 of the radial extension 221. The first end cap further comprises two protrusions 241 that can be used as handles for pulling the composite structures out of the respective undercuts.

The circumferential seal 22 is adapted and arranged for sealing in a radially outward direction. The reinforcement structures 21 are arranged and adapted for backing the radial extensions 221 of the circumferential seal 22. The thickness of seal 22 measured in a direction perpendicular to the axial direction is constant. At the location of the two reinforcement structures 21, seal 22 thus makes respective radially inward steps. Axial projections of seal 22 and the radial outer wall of the filtration media pack 20 are concentric, except for the portions corresponding to the two radial seal extensions 221. The composite structures comprising the radial seal extensions 221 and reinforcement structures 21 are arranged at diametrically opposed sides of the circumferential seal 22.

Each reinforcement structure 21 comprises one or more hollow cavities 212 in a second axial end surface 214 thereof, the second axial end surface 214 projecting in the same direction as the first end of the filtration media pack E1. These hollow cavities 212 play a role in the production process as explained before.

The filtration media pack 20 comprises pleated filtration media arranged in a tubular, cylindrical manner, and is flexible. It does not comprise rigid inner or outer liners 14, 110. The end cap 24 is a potted polyurethane end cap, which is molded onto the pleated filtration media 20 and has the seal 22 integrated.

The associated filter assembly 1 comprises a filter housing 10, 11 having an inlet opening 13 and an outlet opening 14, and an internal cavity receiving the filter element 2 in a sealing manner. The filter housing comprises a main filter housing 10 and a housing cover 11, wherein the main filter housing 10 comprises an inner liner 14 for the filter element 2 having a longitudinal axis and projecting from the main housing 10 into the internal cavity. The inner liner structure 14 is received by an internal cavity of the filter element 2 during installation and comprises a proximal end at the main housing 10 and an opposed distal end. The inner liner 14 comprises two cavities or undercuts 141 at its distal end, adapted and arranged for receiving respective composite structures 21, 221 embodied by the two radial seal extensions 221 and associated reinforcement structures 21.

During installation of the filter element 2 in the housing 10, the first end cap 24 is deformed by pushing each of the composite structures outwardly, for instance by pulling the respective protrusions 241 radially outwardly. The composite structures are moved below the undercuts (e.g. of the respective cavities 111), and are released again, allowing the end cap 24 to snap back inwardly into its original configuration. The filter element 2 is then fixed with respect to the inner liner 14 (Fig. 14(a)). The housing cover 11 comprises an outer liner structure 110 for the filter element 2 having a longitudinal axis and projecting from the housing cover 11 into the internal cavity. At the inner surface of the housing cover 11, radially within the outer liner structure 110, a sealing surface S is provided that is complementary to the circumferential seal 22. When the cover 11 is closed, in a position aligned with respect to the filter element 2 and inner liner 14, the seal 22 seals radially outwardly on that sealing surface S. The distal end of the inner liner structure 14 then provides a seal backing function for the seal 22. The second end cap 25 can seal at a location near the outlet 12 by means of a radial or axial seal.

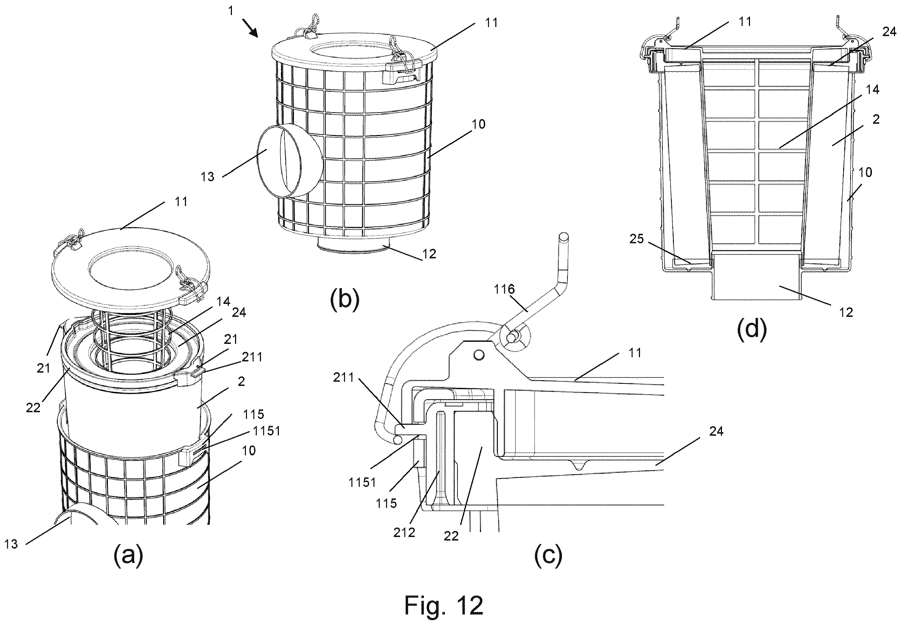

Fig.12 (a) to (d) illustrate an assembly according to a further preferred embodiment of the present disclosure. The filter element 2 is similar to any of the filter elements described in relation to the first preferred embodiment described in relation to Fig.1 (a) (b), Fig. 2 to Fig. 4, Fig. 5(a) to (c), Fig. 6(a) (b), Fig. 7, and Fig. 8 (a) (b). The filter element 2 though further comprises hard plastic reinforcement structures 21 which comprise radially outwardly extending ribs 211. The first end cap 24 and filtration media pack 20 are elastically deformable.

The associated filter assembly comprises a filter housing 10, 11 having an inlet opening 13 and an outlet opening 12, and an internal cavity receiving a filter element in a sealing manner. Filter housing 10,11 comprises a main filter housing 10 and a housing cover 11, wherein the main filter housing 10 comprises a filter servicing opening defined by a circumferential end portion of the main filter housing 10. The housing cover comprises an inner liner 14 for the filter element 2, protruding centrally from the housing cover 11 into the internal volume. The circumferential end portion of the main housing 10 comprises two receiving cavities 115, at diametrically opposed locations, for receiving respective composite structures 221, 21 embodied by respective radial seal extensions 221 and associated reinforcement structures 21 of the filter element 2. The cavities 115 are similar to the cavities 111 for the first preferred embodiments, but are now arranged at the servicing opening (instead of at the distal end of the outer liner 110). During installation of the filter element 2 in the housing 10, the first end cap 24 is deformed by pushing each of the composite structures inwardly. Then the composite structure is moved below the undercuts of the respective cavities 111, and released again, allowing the end cap 24 to snap back outwardly into its original configuration. Cavities 11 comprise corresponding cavity slots 1151 in their radially outer wall, for receiving the radially outwardly extending ribs 211 and allowing the radially outwardly extending ribs 211 to pass though. The radially extending ribs 211 are finally exposed outside of the main housing 10. The housing cover 11 comprises latches 116 for locking the cover 11 to the main housing 10, the latches latching on respective exposed portions of the radially outwardly extending ribs 211.

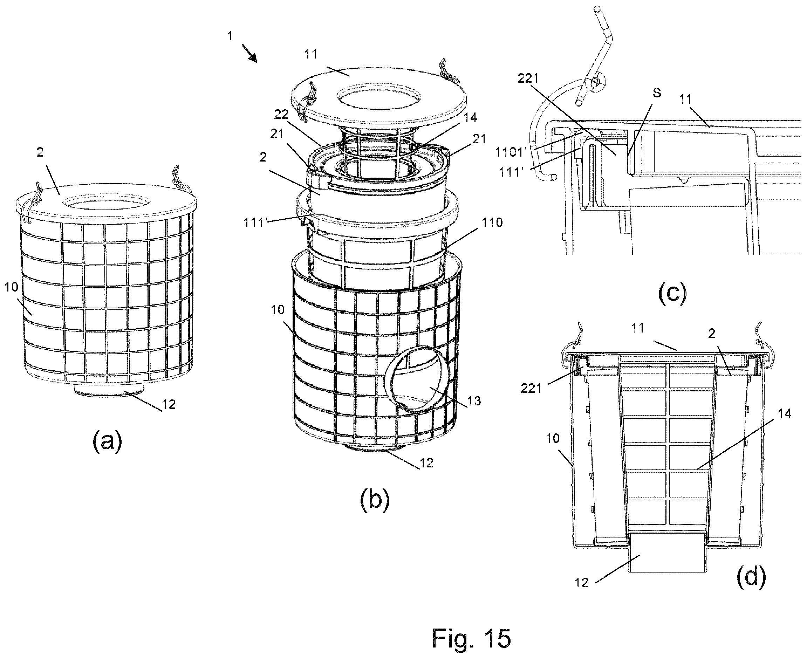

Fig.15 (a) to (d) illustrate an assembly according to a further preferred embodiment of the present disclosure. The filter element 2 is similar to any of the filter elements 2 described in relation to the first preferred embodiment described in relation to Fig.1 (a) (b), Fig. 2 to Fig. 4, Fig. 5(a) to (c), Fig. 6(a) (b), Fig. 7, and Fig. 8 (a) (b), and has a second end cap which is open. The associated filter assembly 1 comprises a filter housing 10, 11 having an inlet opening 13 and an outlet opening 12, and an internal cavity receiving the disclosed filter element 2 in a sealing manner. The filter housing comprises a main filter housing 10 and a housing cover 11. The housing cover 11 comprises an inner liner structure 110 for the filter element 2 having a longitudinal axis and projecting from the housing cover 11 into the internal cavity. A separate and removable outer liner structure 110 is provided that is adapted for receiving the filter element 2. The separate outer liner structure 110 comprises an open first end that comprises a ring structure that is adapted for receiving the first end 24 of the filter element 2, and an axially opposed second end. The first end of the outer liner structure 110 comprises two cavities 111', adapted and arranged for receiving the respective composite structures 21, 221 embodied by the two radial seal extensions 221 and associated reinforcement structures 21 of the filter element 2. The cavities 111' open up radially inwardly towards a central opening of the first end of the separate outer liner structure and are provided at diametrically opposed sides of the first end of the outer liner structure 110. Each cavity 111' (see Fig. 15(b)(c)) comprises and is at least partially defined by an undercut 1101'.

When providing a new filter element during servicing, filter element 2 is first installed in the outer liner structure 110. The first end cap 24 of filter element 2 is therefore deformed by pushing each of the composite structures inwardly. The composite structures are brought below the respective undercut 1101' and into the respective cavity 111', and are released again, allowing the end cap to snap back outwardly into its original configuration. This process can for instance be applied to one composite structure at a time or simultaneously to both composite structures, and results in the filter element 2 being fixed into the outer liner structure 110. Each composite structure is thereby trapped in the axial direction below the undercut wall 1101' and the filter element 2 is locked into the separate outer liner structure 110. The combination of outer liner 110 and filter element are then inserted into a filter housing, and cover 11 is provided to close the housing, at the same time introducing the inner liner 14 into filter element 2. Filter element 2 thereby forms a radial seal with a complementary sealing surface S arranged on the inside of the housing cover 11. The ring structure of the first open end of the outer liner structure 110 thereby provides a seal backing function for the radial seal 22, indirectly via the embedded reinforcement structures 21 in the regions of the radial seal extensions 221, and directly for the complementary portions/the rest of the seal 22. The second end cap 25 can seal at a location near the outlet 12 by means of a radial or axial seal.

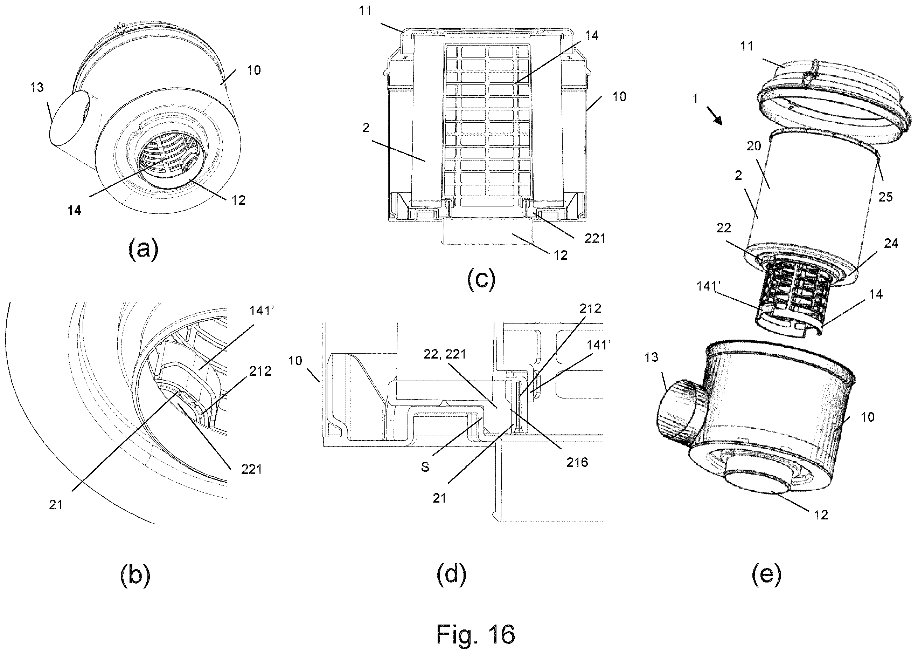

Fig.16 (a) to (d) illustrate a filter element and a filter assembly according to a further preferred embodiment of the present disclosure. Filter element 2 comprises a filtration media pack 20 comprising a longitudinal axis, a first open end cap 24 arranged at a first axial end E1 of the media pack 20 in a fluid tight manner and comprises a central opening 26. At the second axial end E2 of the filtration media pack 20 a second end cap 25 is provided in a fluid tight manner, which is a closed end cap 25. The first end cap 24 is at least partially flexible, elastically and nondestructively deformable. The first end cap 24 further comprises a round circumferential seal 22 surrounding the central opening 26. Circumferential seal 22 comprises two radial seal extensions 221 extending radially inwardly from the rest of seal 22. It further comprises two separate reinforcement structures 21 partially embedded into the material of the first end cap 24. Each reinforcement or covering structure 21 covers at least a portion of a corresponding radial extension 221 of the seal 22, comprising the radially inner surface 216 of the radial extension 221.

The circumferential seal 22 is adapted and arranged for sealing in a radially outward direction. The hard plastic reinforcement structures 21 are arranged and adapted for backing the radial extension 221 of the circumferential seal 22. The thickness of seal 22 measured in a direction perpendicular to the axial direction is constant. At the location of the two reinforcement structures 21, seal 22 thus makes respective radially inward steps. Axial projections of seal 22 and the radial outer wall of the filtration media pack 20 are concentric, except for the portions corresponding to the two radial seal extensions 221.

The composite structures comprising the radial seal extensions 221 and reinforcement structures 21 are arranged at diametrically opposed sides of the circumferential seal 22.

Each reinforcement structure 21 comprises one or more hollow cavities 212 in a second axial end surface 214 thereof, the second axial end surface 214 projecting in the same direction as the first end of the filtration media pack E1. These hollow cavities 212 play a role in the production process as explained before.

The filtration media pack 20 comprises pleated filtration media arranged in a tubular, cylindrical manner, and is flexible. It does not comprise rigid inner or outer liners 14, 110. The first end cap 24 is a potted polyurethane end cap, which is molded onto the pleated filtration media 20 and has the seal 22 integrated.

The associated filter assembly 1 comprises a separate, removable inner liner structure 14 for the filter element 2. The inner liner 14 extends axially between a first axial end and a second axial end. The filter element 2 comprises an internal volume for receiving the inner liner 14. The separate inner liner 14 comprises one or more cavities or undercuts 141' at the first axial end. During installation of the filter element 2 in the filter housing 10, the first end cap 24 is deformed by pushing each of the composite structures outwardly. The composite structure is displaced below the respective undercut 141' (or undercut of the cavity), and released again, allowing the end cap 24 to snap back inwardly into its original configuration. The filter element 2 and inner liner 14 are then locked to each another and can be installed together in the main filter housing 10 by positioning their first axial ends towards the outlet portion of the housing 10. Adjacent to outlet 12, the main housing 10 comprises a circumferential sealing surface S complementary to the circumferential seal 22 and adapted and arranged for providing a radially outward sealing for the radial seal 22. The first axial end of the separate, removable inner liner 14 then provides a seal backing function for the radial seal 22, indirectly via the embedded reinforcement structures 21 in the regions of the radial seal extensions 221, and directly for the complementary portions/the rest of the seal 22.

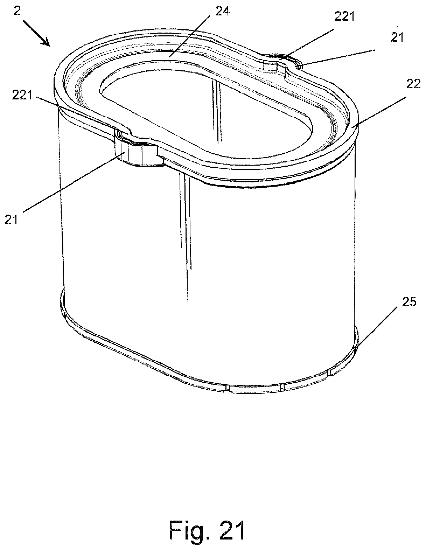

The filter elements described before were all of cylindrical shape, i.e. having a (pleated) media pack arranged in a tubular manner corresponding to a cylinder. The shape of the filter media pack is though not limited to cylinders but can be arranged in other shapes. Amongst others, the filter media pack 20 can for instance comprise an elliptical, obround or racetrack shape. An element similar to the element of Fig. 5(a) to (c) but having media arranged in an obround configuration is illustrated in Fig. Fig.21.

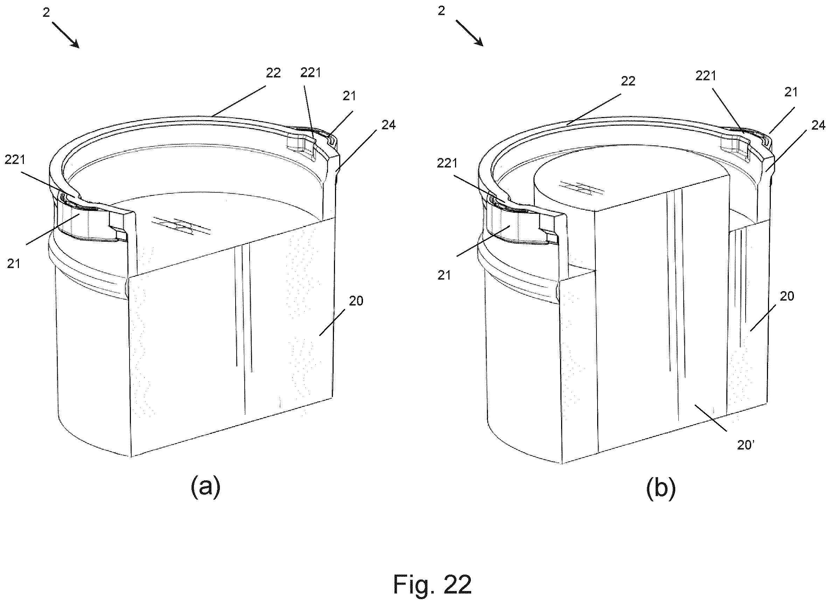

Other possible embodiments are illustrated in Fig. 21 to 23. Fig. 22(a) illustrates filter element 2 comprising a media pack 20 of the fluted or z-type, having an elastically deformable first end cap 24 having two radial seal extensions 221 and corresponding embedded reinforcement structures 21. The end cap 24 comprises a polyurethane material and extends axially away from a periphery of an inflow or outflow face of the filtration media pack 20. Fig. 22(b) illustrates a similar filter element 2 comprising a composite fluted filtration media pack which comprises a first, centrally positioned fluted media pack 20' having a first height and having a first set of filtration characteristics which is surrounded by a second fluted media pack 20 having a shorter height and having a different second set of filtration characteristics.

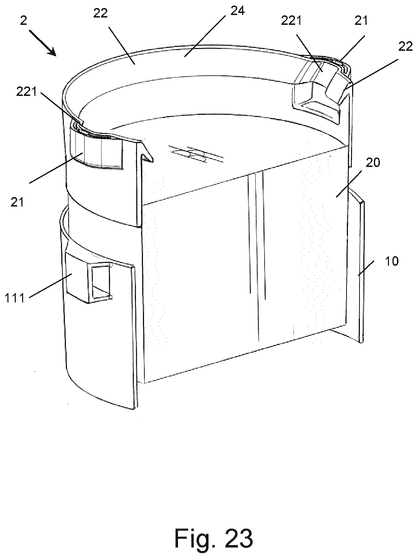

Fig. 23 illustrates a filter element 2 comprising a media pack 20 of the fluted or z-type, having an elastically deformable first end cap 24 having two radial seal extensions 221 and corresponding embedded reinforcement structures 21. The end cap 24 comprises a thermoplastic elastomer (TPE) material and extends axially away from a periphery of an inflow or outflow face of the filtration media pack 20. The seal 22 is embodied as an inwardly directed lip seal, which is backed by the reinforcement structures 21 in the area of the radial seal extensions.

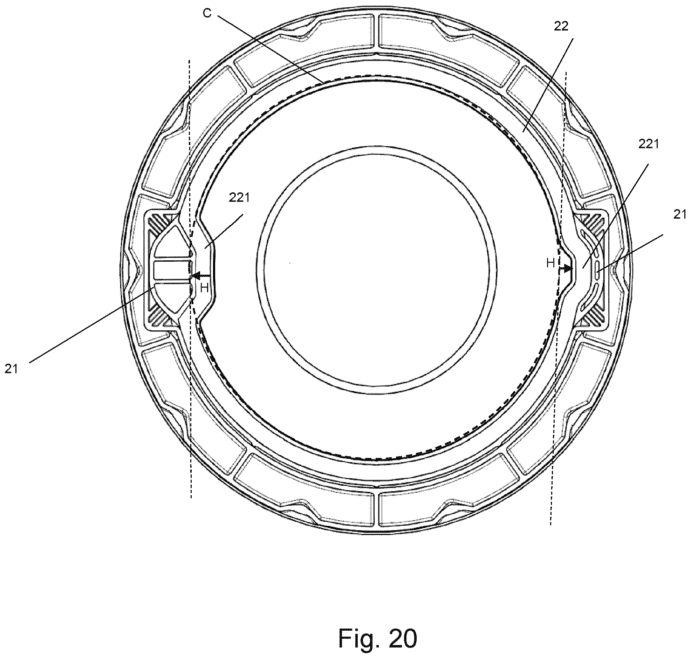

All of the filter elements 2 described before discloses (two) radial seal extensions 221 and corresponding reinforcement structures 21 which are congruent, for instance having the same height (axial extent) and width (angular extent) and depth (radial extent). In another view, the axial projections of the one or more radial seal extensions 221 are congruent. Alternatives are possible. For instance, in alternative embodiments, the axial projections of two or more radial seal extensions differ in one or more of width and depth. Also, in certain embodiments, one of the radial seal extensions 221, and corresponding reinforcement structure 21, can extend radially inwardly, and another one, and corresponding reinforcement structure 21, radially outwardly. Further, in certain embodiments, one of the radial seal extensions 221 can extend radially inwardly, and another one radially outwardly, while both cover structures 21 extend radially outwardly (depicted in Fig. 20). Fig. 20 also illustrates the definition of height H of the step of the radial seal extensions and related virtual contour C (dotted line) of a virtual non radially extended seal 22.

For the present disclosure, the terms inlet and outlet have been used for openings in the housing through which the air flow passes "from inlet to outlet". The skilled person knows that in certain assembly configurations, a reverse flow can be applied, wherein the flow can be in a reverse direction from outlet to inlet. This does not impact the nature of the inventive concepts of the present disclosure.

For instance, the following could be claimed:
1. A filter element (2) comprising a filtration media pack (20) comprising a longitudinal axis, a first open end cap (24) arranged at a first axial end (E1) of the filtration media pack (20) in a fluid tight manner and comprising a central opening (26), wherein the first end cap is at least partially flexible and non-destructively deformable in a radial direction, for instance between a first shape and a substantially different second shape, and comprises
   a. a circumferential seal (22) surrounding the opening, wherein the circumferential seal comprises one or more radial seal extensions (221); and
   b. one or more, preferably separate, reinforcement structures (21) at least partially embedded into a material of the first end cap (24) and preferably arranged in respective areas of the one or more radial seal extensions (221).
2. A filter element (2) according to item 1, wherein the one or more reinforcement structures (21) are partially embedded into a material of the first end cap (24), each reinforcement structure (21) covering at least a portion of a corresponding radial extension (221) of the seal (22), the portion comprising at least a radially inner or outer surface (216, 215) of the radial extension (221) and preferably a first axial end surface (213) of the radial extension (221), the first axial end surface projecting towards a second axial end (E2) of the filtration media pack (20).
3. A filter element according to item 1 or 2, wherein the circumferential seal is adapted and arranged for sealing in a radial direction, and wherein the reinforcement structures (21) are arranged and adapted for backing the radial extension (221) of the circumferential seal (22).
4. A filter element according to item 3, wherein a thickness of the seal measured in a direction perpendicular to the axial direction is substantially constant.
5. A filter element according to any of the previous items, wherein one or more or all radial seal extensions are extending radially outwardly.
6. A filter element according to any of the previous items, wherein one or more or all radial seal extensions are extending radially inwardly.
7. A filter element according to any of the previous items, wherein the seal generally follows, for instance is in axial projection generally concentric with, an outer and/or inner contour of the filtration media pack, except for the one or more radial seal extensions (221).
8. A filter element according to any of the previous items, wherein a minimal radial cross-dimension of the second shape of the first open end cap is at least 5% smaller than a minimal radial cross-dimension of the first shape.
9. A filter element according to any of the previous clams, comprising only two radial seal extensions (221) which are arranged at diametrically opposed sides of the circumferential seal (22).
10. A filter element according to item 9, wherein a distance between the radial seal extensions (221) in the second shape is at least 5% smaller than the distance in the first shape.
11. A filter element according to item 9, wherein a distance between the radial seal extensions (221) in the second shape is at least 5% larger than the distance in the first shape.
12. A filter element according to any of the previous items, wherein the first end cap (24) can be deformed in a radial direction by radial force components which are smaller than 40 N.
13. A filter element according to any of the previous items, wherein the each reinforcement structure (21) comprises a hollow cavity (212) in a second axial end surface (214) thereof, the second axial end surface (214) projecting in the same direction as the first end of the filtration media pack (E1).
14. A filter element according to any of the previous items, wherein the first end cap (24) is elastically deformable.
15. A filter element according to any of the previous items, wherein the filtration media pack (20) comprises pleated filtration media, preferably arranged in a tubular manner, and is flexible and preferably elastically deformable.
16. A filter element according to 15, wherein the filtration media comprises one or more layers selected from the group of media layers and media support layers.
17. A filter element according to any of items 1 to 14, wherein the filtration media pack (20) is of the fluted or z-type.
18. A filter element according to any of the previous items, wherein the first end cap (24), and preferably also the circumferential seal (22), is manufactured by a potting process, preferably a foamed polyurethane potting process, whereby at least a portion of the one or more separate reinforcement structures (21) is embedded in the first end cap (24).
19. A filter element according to any of the previous items, wherein the circumferential seal (22) is formed integrally with the first end cap (24).
20. A filter element according to any of the previous items, wherein the first circumferential seal (22) comprises a 2-fold rotational symmetry with respect to the filtration media pack axis.
21. A filter element according to any of the previous items, comprising an axially extending groove (23) in a radially outer surface of the media pack (20), preferably extending from the first end (E1) to the second end (E2).
22. A package comprising a box, bag or sleeve comprising a filter element according to any of the previous items, wherein the filter element (2) is kept in an elastically deformed configuration by an inner sidewall of the box, bag or sleeve.
23. A filter assembly (1) comprising a filter housing (10, 11) having an inlet opening (13) and an outlet opening (14), and an internal cavity receiving a filter element (2) according to any of items 1 to 21 in a sealing manner thereby dividing the internal cavity into a unfiltered air volume fluidly connected to the inlet and a filtered air volume fluidly connected to the outlet by the filtration element, wherein the filter housing comprises a main filter housing (10) and a housing cover (11), wherein the housing cover (11) comprises an outer liner structure (110) for the filter element (2) having a longitudinal axis and projecting from the housing cover (11) into the internal cavity, the outer liner structure (110) receiving the filter element (2) and comprising a proximal end at the housing cover (11) and an opposed distal end (112), and the outer liner structure (110) comprising one or more cavities (111) at its distal end, adapted and arranged for receiving respective one or more composite structures (21, 221) embodied by the one or more radial seal extensions (221) and associated reinforcement structures (21).
24. A filter assembly according to item 23, wherein the filter element comprises an axially extending groove (23) in a radially outer surface of the media pack (20), and wherein the outer liner structure (110) comprises a corresponding axially extending rib or guiding structure (1102) arranged on an internal surface of the outer liner (110).
25. A filter assembly (1) comprising a filter housing (10, 11) having an inlet opening (13) and an outlet opening (14), and an internal cavity receiving a filter element (2) according to any of items 1 to 21 in a sealing manner thereby dividing the internal cavity into a unfiltered air volume fluidly connected to the inlet and a filtered air volume fluidly connected to the outlet by the filtration element, wherein the filter housing comprises a main filter housing (10) and a housing cover (11), wherein the main filter housing (10) comprises a filter servicing opening defined by a circumferential end portion of the main filter housing (10), wherein the circumferential end portion comprises one or more receiving cavities (115) for receiving respective composite structures (221, 21) embodied by respective radial seal extensions (221) and associated reinforcement structures (21) of the filter element 2.
26. A filter assembly according to item 25, wherein the reinforcement structures (21) comprise radially outwardly extending ribs (211), and wherein the cavities comprise corresponding cavity slots (1151) for receiving the radially outwardly extending ribs (211) and allowing the radially outwardly extending ribs (211) to pass though and to be exposed outside of the main housing (10), wherein the housing cover 11 comprises latches, the latches latching on respective exposed portions of the radially outwardly extending ribs (211).
27. A filter assembly (1) comprising a filter housing (10, 11) having an inlet opening (13) and an outlet opening (14), and an internal cavity receiving a filter element (2) according to any of items 1 to 21 in a sealing manner thereby dividing the internal cavity into a unfiltered air volume fluidly connected to the inlet and a filtered air volume fluidly connected to the outlet by the filtration element, wherein the filter housing comprises a main filter housing (10) and a housing cover (11), wherein the main filter housing (10) comprises an inner liner (14) for the filter element (2) having a longitudinal axis and projecting from the main housing (10) into the internal cavity, the inner liner structure (14) being received by an internal cavity of the filter element (2) and comprising a proximal end at the main housing (10) and an opposed distal end, and the inner liner (14) comprising one or more cavities (141) at its distal end, adapted and arranged for receiving respective one or more composite structures (21, 221) embodied by the one or more radial seal extensions (221) and associated reinforcement structures (21).
28. A filter assembly (1) comprising a filter element (2) according to any of the previous items 1 to 21 and a separate, removable outer liner (110) for the filter element (2), wherein the outer liner (110) extends in an axial direction between a first axial end and a second axial end and comprises an internal volume for receiving the filter element (2), wherein the outer liner comprises one or more cavities (111') at the first axial end receiving the one or more respective composite structures (221, 21) embodied by respective radial seal extensions (221) and associated reinforcement structures (21) of the filter element 2.
29. A filter assembly (1) comprising a filter element (2) according to any of the previous items 1 to 21 and a separate, removable inner liner (14) for the filter element (2), wherein the inner liner (14) extends in an axial direction between a first axial end and a second axial end, and the filter element (2) comprises an internal volume for receiving the inner liner (14), wherein the inner liner comprises one or more cavities (141') at the first axial end receiving the one or more respective composite structures (221, 21) embodied by respective radial seal extensions (221) and associated reinforcement structures (21) of the filter element (2).
30. A filter assembly according to any of items 23 to 29, wherein the one or more cavities (111, 141, 111', 141', 115) form an undercut portion preventing the composite structures (21, 221) from being inserted into the cavities (141') without deforming the filter element (2).
31. A filter assembly (1) comprising a filter housing (10, 11) having an inlet opening (13) and an outlet opening (14), and an internal cavity receiving a filter element (2) according to any of items 1 to 21 in a sealing manner thereby dividing the internal cavity into a unfiltered air volume fluidly connected to the inlet and a filtered air volume fluidly connected to the outlet by the filtration element, wherein the filter housing comprises a main filter housing (10) and a housing cover (11), wherein the housing cover (11) comprises an outer liner structure (110) for the filter element (2) having a longitudinal axis and projecting from the housing cover (11) into the internal cavity, the outer liner structure (110) receiving the filter element (2) and comprising a proximal end at the housing cover (11) and an opposed distal end (112), and the outer liner structure (110) comprising one or more undercut portions (1101) at its distal end, adapted and arranged for preventing the composite structures (21, 221) embodied by the one or more radial seal extensions (221) and associated reinforcement structures (21) from passing from one side to the opposed side of the undercut (1101) portions without deforming the filter element (2).
32. A filter assembly according to item 31, wherein the filter element comprises an axially extending groove (23) in a radially outer surface of the media pack (20), and wherein the outer liner structure (110) comprises a corresponding axially extending rib or guiding structure (1102) arranged on an internal surface of the outer liner (110).

### Reference numbers

| | |
|---|---|
| 1 | Filter assembly |
| 10 | Main filter housing |
| 11 | Housing cover |
| 110 | Outer liner structure |
| 1101, 1101' | Undercut |
| 1102 | Axially extending rib or guiding structure |
| 111, 111' | Receiving outer liner cavity |
| 111a | radially outward wall |
| 111b | axial end surface or wall |
| 111c | sidewalls |
| 111d | Pushing rib |
| 112 | Distal end of outer liner |
| 1121 | Rim at distal end |
| 113 | Cover handle |
| 114 | Cover lever |
| 115 | Receiving housing cavity |
| 1151 | Receiving housing cavity slot |
| 116 | Cover latches |
| 12 | Housing outlet |
| 13 | Housing inlet |
| 14 | Inner liner structure |
| 141, 141' | Inner liner cavities |
| 2 | Filter element |
| 20 | Filtration media pack |
| 20' | Additional filtration media pack |
| 21 | Reinforcement structure, covering structure or shell |
| 211 | Radially extending rib |
| 212 | Hollow cavity |
| 213 | First axial end surface of radial extension |
| 214 | Second axial end surface of radial extension |
| 215 | Radially outer surface of radial extension |
| 216 | Radially inner surface of radial extension |
| 22 | Circumferential seal |
| 221 | Radial seal extension |
| 23 | Groove |
| 24 | First end cap |
| 241 | Protrusions |
| 25 | Second end cap |
| 26 | Central opening |
| 27 | Pushing surface |
| C | Contour of virtual non radially extended seal |
| H | Height of the radial seal extensions |
| M | Mold |
| S | Sealing surface |
| E1, E2 | First and second ends of filter media pack |

## Claims

1. A filter element (2) comprising a filtration media pack (20) comprising a longitudinal axis, a first open end cap (24) arranged at a first axial end (E1) of the filtration media pack (20) in a fluid tight manner and comprising a central opening (26), wherein said first end cap is at least partially flexible and non-destructively deformable in a radial direction, for instance between a first shape and a substantially different second shape, and comprises
a. a circumferential seal (22) surrounding said opening, wherein said circumferential seal comprises one or more radial seal extensions (221); and
b. one or more, preferably separate, reinforcement structures (21) at least partially embedded into a material of said first end cap (24) and preferably arranged in respective areas of said one or more radial seal extensions (221).

2. A filter element (2) according to claim 1, wherein said one or more reinforcement structures (21) are partially embedded into a material of said first end cap (24), each reinforcement structure (21) covering at least a portion of a corresponding radial extension (221) of said seal (22), said portion comprising at least a radially inner or outer surface (216, 215) of said radial extension (221) and preferably a first axial end surface (213) of said radial extension (221), said first axial end surface projecting towards a second axial end (E2) of said filtration media pack (20).

3. A filter element according to claim 1 or 2, wherein said circumferential seal is adapted and arranged for sealing in a radial direction, and wherein said reinforcement structures (21) are arranged and adapted for backing said radial extension (221) of said circumferential seal (22).

4. A filter element according to claim 3, wherein a thickness of said seal measured in a direction perpendicular to said axial direction is substantially constant.

5. A filter element according to any of the previous claims, wherein one or more or all radial seal extensions are extending radially outwardly.

6. A filter element according to any of the previous claims, wherein one or more or all radial seal extensions are extending radially inwardly.

7. A filter element according to any of the previous claims, wherein said each reinforcement structure (21) comprises a hollow cavity (212) in a second axial end surface (214) thereof, said second axial end surface (214) projecting in the same direction as said first end of said filtration media pack (E1).

8. A package comprising a box, bag or sleeve comprising a filter element according to any of the previous claims, wherein the filter element (2) is kept in an elastically deformed configuration by an inner sidewall of the box, bag or sleeve.

9. A filter assembly (1) comprising a filter housing (10, 11) having an inlet opening (13) and an outlet opening (14), and an internal cavity receiving a filter element (2) according to any of claims 1 to 7, in a sealing manner thereby dividing said internal cavity into a unfiltered air volume fluidly connected to said inlet and a filtered air volume fluidly connected to said outlet by said filtration element, wherein said filter housing comprises a main filter housing (10) and a housing cover (11), wherein said housing cover (11) comprises an outer liner structure (110) for said filter element (2) having a longitudinal axis and projecting from said housing cover (11) into said internal cavity, said outer liner structure (110) receiving said filter element (2) and comprising a proximal end at said housing cover (11) and an opposed distal end (112), and said outer liner structure (110) comprising one or more cavities (111) at its distal end, adapted and arranged for receiving respective one or more composite structures (21, 221) embodied by said one or more radial seal extensions (221) and associated reinforcement structures (21).

10. A filter assembly (1) comprising a filter housing (10, 11) having an inlet opening (13) and an outlet opening (14), and an internal cavity receiving a filter element (2) according to any of claims 1 to 7, in a sealing manner thereby dividing said internal cavity into a unfiltered air volume fluidly connected to said inlet and a filtered air volume fluidly connected to said outlet by said filtration element, wherein said filter housing comprises a main filter housing (10) and a housing cover (11), wherein said main filter housing (10) comprises a filter servicing opening defined by a circumferential end portion of said main filter housing (10), wherein said circumferential end portion comprises one or more receiving cavities (115) for receiving respective composite structures (221, 21) embodied by respective radial seal extensions (221) and associated reinforcement structures (21) of said filter element 2.

11. A filter assembly (1) comprising a filter housing (10, 11) having an inlet opening (13) and an outlet opening (14), and an internal cavity receiving a filter element (2) according to any of claims 1 to 7, in a sealing manner thereby dividing said internal cavity into a unfiltered air volume fluidly connected to said inlet and a filtered air volume fluidly connected to said outlet by said filtration element, wherein said filter housing comprises a main filter housing (10) and a housing cover (11), wherein said main filter housing (10) comprises an inner liner (14) for said filter element (2) having a longitudinal axis and projecting from said main housing (10) into said internal cavity, said inner liner structure (14) being received by an internal cavity of said filter element (2) and comprising a proximal end at said main housing (10) and an opposed distal end, and said inner liner (14) comprising one or more cavities (141) at its distal end, adapted and arranged for receiving respective one or more composite structures (21, 221) embodied by said one or more radial seal extensions (221) and associated reinforcement structures (21).

12. A filter assembly (1) comprising a filter element (2) according to any of the previous claims 1 to 7, and a separate, removable outer liner (110) for said filter element (2), wherein said outer liner (110) extends in an axial direction between a first axial end and a second axial end and comprises an internal volume for receiving said filter element (2), wherein said outer liner comprises one or more cavities (111') at said first axial end receiving said one or more respective composite structures (221, 21) embodied by respective radial seal extensions (221) and associated reinforcement structures (21) of said filter element 2.

13. A filter assembly (1) comprising a filter element (2) according to any of the previous claims 1 to 7, and a separate, removable inner liner (14) for said filter element (2), wherein said inner liner (14) extends in an axial direction between a first axial end and a second axial end, and said filter element (2) comprises an internal volume for receiving said inner liner (14), wherein said inner liner comprises one or more cavities (141') at said first axial end receiving said one or more respective composite structures (221, 21) embodied by respective radial seal extensions (221) and associated reinforcement structures (21) of said filter element (2).

14. A filter assembly according to any of claims 9 to 13, wherein said one or more cavities (111, 141, 111', 141', 115) form an undercut portion preventing said composite structures (21, 221) from being inserted into said cavities (141') without deforming said filter element (2).

15. A filter assembly (1) comprising a filter housing (10, 11) having an inlet opening (13) and an outlet opening (14), and an internal cavity receiving a filter element (2) according to any of claims 1 to 7, in a sealing manner thereby dividing said internal cavity into a unfiltered air volume fluidly connected to said inlet and a filtered air volume fluidly connected to said outlet by said filtration element, wherein said filter housing comprises a main filter housing (10) and a housing cover (11), wherein said housing cover (11) comprises an outer liner structure (110) for said filter element (2) having a longitudinal axis and projecting from said housing cover (11) into said internal cavity, said outer liner structure (110) receiving said filter element (2) and comprising a proximal end at said housing cover (11) and an opposed distal end (112), and said outer liner structure (110) comprising one or more undercut portions (1101) at its distal end, adapted and arranged for preventing said composite structures (21, 221) embodied by said one or more radial seal extensions (221) and associated reinforcement structures (21) from passing from one side to the opposed side of said undercut (1101) portions without deforming said filter element (2).
